# EUROPEAN PATENT APPLICATION

(11) **EP 4 575 920 A1**
(43) Date of publication of application: **25.06.2025**
(21) Application number: 23383330.0
(22) Date of filing: 20.12.2023
(51) Int. Cl.: G06N 10/20, G06N 10/80

(54) **SYSTEM AND METHOD FOR SIMULATING QUANTUM COMPUTER USING TENSOR NETWORKS AND RELATED METHODS**

(71) Applicant: Multiverse Computing S.L., 20014 Donostia-San Sebastian (ES)
(72) Inventor: ORÚS, Roman, Donostia / San Sebastián (ES); JAHROMI, Saeed, Donostia / San Sebastián (ES); SINGH, Sukhbinder, Donostia / San Sebastián (ES); PATRA, Siddhartha, Donostia / San Sebastián (ES)
(74) Representative: Balder IP Law, S.L.

(57) **Abstract**

A computer-implemented method and system for simulating quantum computations using a lattice-free tensor network simulation that adapts dynamically to an interaction pattern in the quantum computation. The method includes initializing an initial state, applying a quantum gate on two quantum bits, generating a connection in a network structure, truncating numerical values using a mathematical decomposition and an update process, computing an entropy measure for all connections, truncating the connections with the lowest entropy measure to a dimensional parameter, and computing expectation values of observables at the end of the simulation. The system includes modules and submodules for performing these steps.

## Description

### TECHNICAL FIELD

The invention pertains to the field of quantum computing, specifically to a system and method for simulating a quantum computer using tensor networks.

### BACKGROUND

Quantum computing is a rapidly evolving field that leverages the principles of quantum mechanics to perform computations. Quantum computers have the potential to solve certain types of problems much more efficiently than classical computers. However, simulating quantum systems on classical computers is a challenging task due to the exponential growth of the state space with the number of quantum bits (qubits). Traditional simulation methods often rely on specific geometric assumptions, which may not always accurately represent the quantum system being simulated. Furthermore, these methods may not adapt well to the specific computation being performed, leading to inefficiencies and inaccuracies in the simulation. Therefore, there is a need for improved methods for simulating quantum systems on classical computers.

### SUMMARY

In accordance with embodiments, a computer-implemented method is provided for simulating quantum computations using a lattice-free tensor network. The method involves receiving a quantum computation to be simulated and implementing a tensor network simulation that dynamically adapts to an interaction pattern in the quantum computation. An initial state is initialized in the tensor network simulation, and a quantum gate is applied on two quantum bits, generating a connection in a network structure and truncating numerical values using a mathematical decomposition and an update process. An entropy measure is computed for all connections in the network structure, and connections with the lowest entropy measure are truncated to a dimensional parameter. Expectation values of observables are computed at the end of the simulation, involving quantum bits determined in a submodule and using an approximation method.

In accordance with other embodiments, a computational system is provided for simulating quantum computations using a lattice-free tensor network. The system comprises modules for receiving a quantum computation, implementing a tensor network simulation, initializing an initial state, applying a quantum gate on two quantum bits, computing an entropy measure for all connections in the network structure, truncating connections with the lowest entropy measure to a dimensional parameter, and computing expectation values of observables at the end of the simulation. The computation of the expectation values involves quantum bits determined in a submodule and uses an approximation method.

### BRIEF DESCRIPTION OF THE DRAWINGS

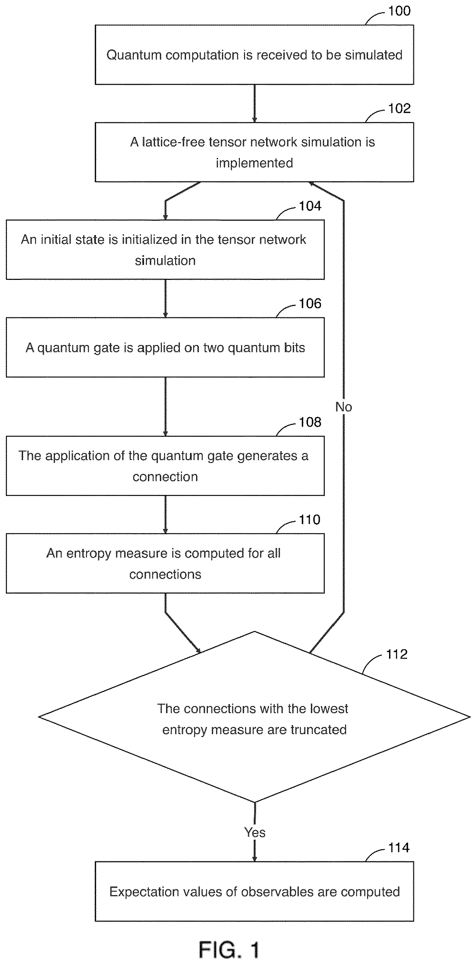

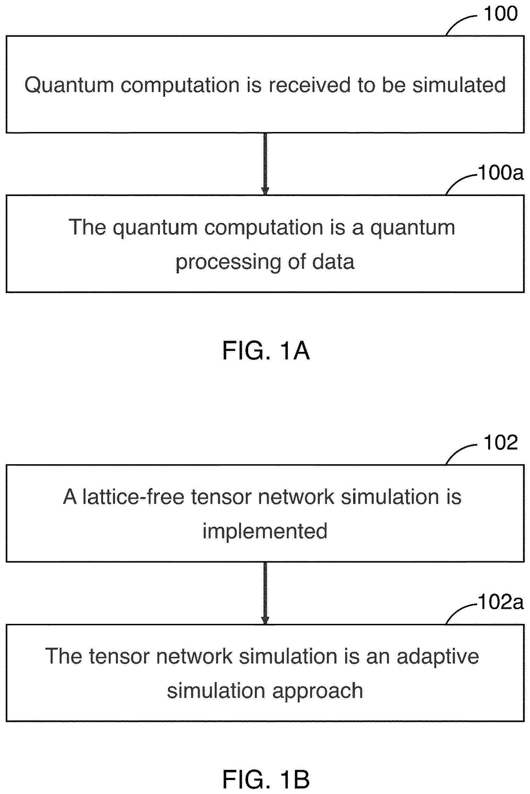

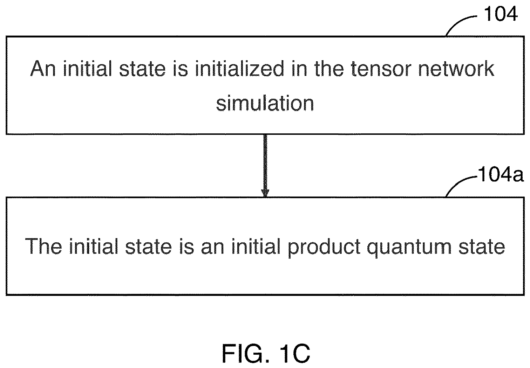

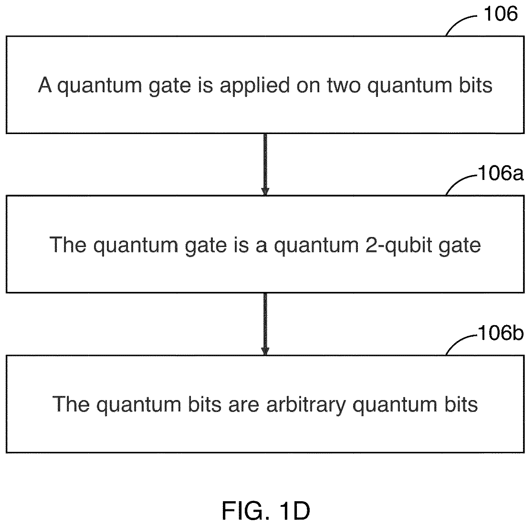

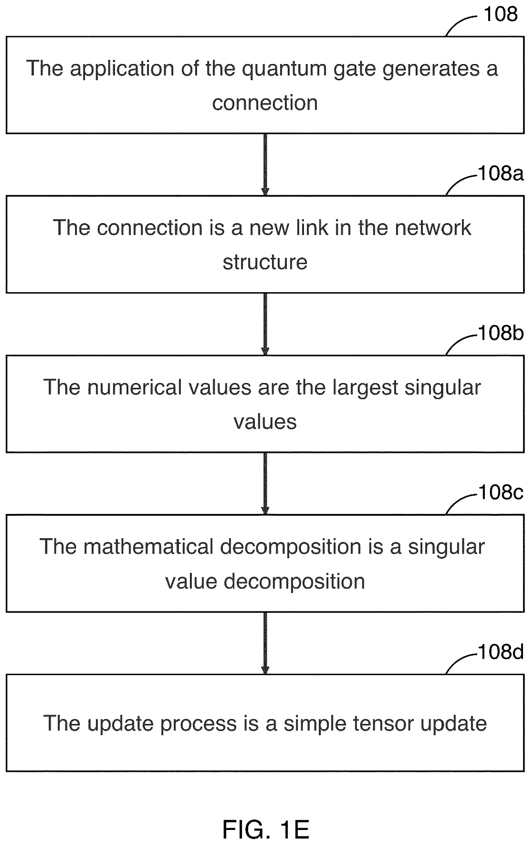

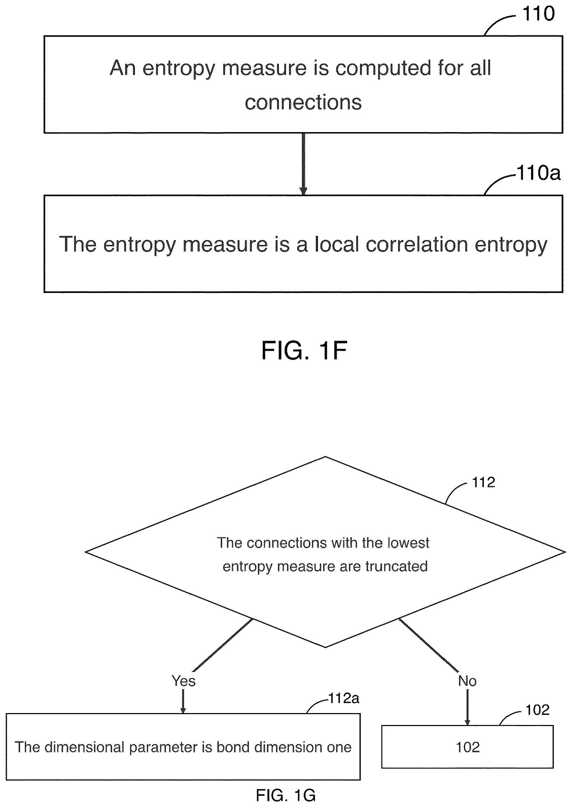

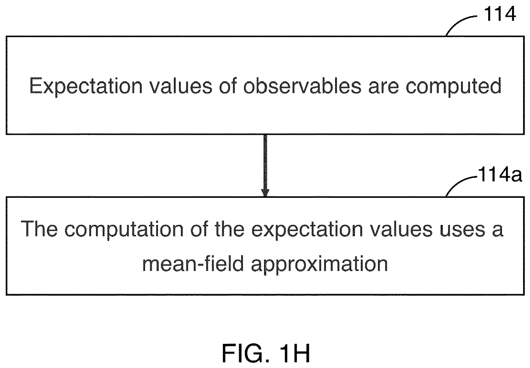

FIG. 1 illustrates, in a flowchart, operations for simulating a quantum computation using a lattice-free tensor network simulation method.
FIG. 1A illustrates, in a flowchart, operations for receiving a quantum computation for simulation and identifying its type.
FIG. 1B illustrates, in a flowchart, operations for implementing a lattice-free tensor network simulation and specifying its approach.
FIG. 1C illustrates, in a flowchart, operations for initializing an initial state in the tensor network simulation and specifying its type.
FIG. 1D illustrates, in a flowchart, operations for applying a quantum gate on two quantum bits and specifying the type of quantum gate and quantum bits.
FIG. 1E illustrates, in a flowchart, operations for generating a connection by applying the quantum gate and specifying the connection, numerical values, mathematical decomposition, and update process.
FIG. 1F illustrates, in a flowchart, operations for computing an entropy measure for all connections and specifying its type.
FIG. 1G illustrates, in a flowchart, operations for truncating the connections with the lowest entropy measure and specifying the dimensional parameter.
FIG. 1H illustrates, in a flowchart, operations for computing expectation values of observables and specifying the approximation method used.

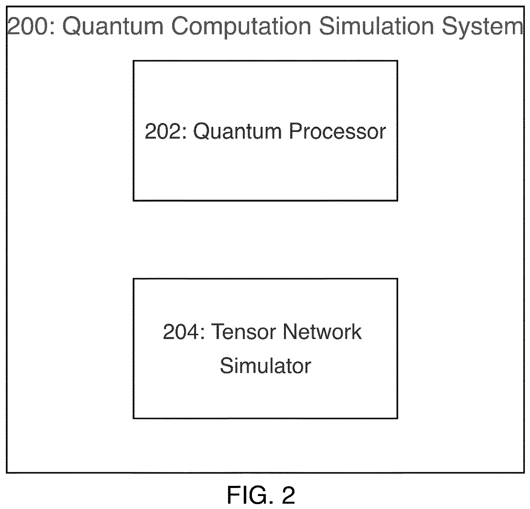

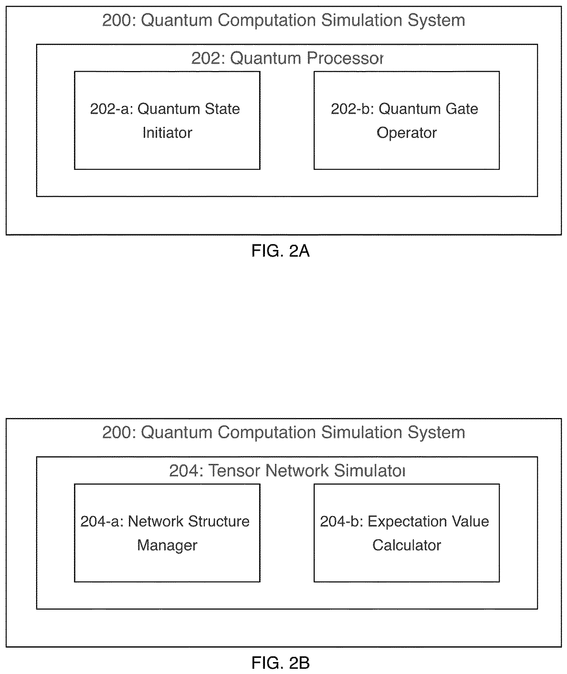

FIG. 2 illustrates, in a block diagram, the main components of a Quantum Computation Simulation System.
FIG. 2A FIG. 2A illustrates, in a block diagram, the Quantum Processor and its sub-components within the Quantum Computation Simulation System.
FIG. 2B FIG. 2B illustrates, in a block diagram, the Tensor Network Simulator and its sub-components within the Quantum Computation Simulation System.

### DETAILED DESCRIPTION

Step 100 and sub-step 100-a pertain to the process of receiving a specific quantum computation for simulation. This process involves a quantum computation and a simulation system. The quantum computation, which can also be understood as quantum processing of data (Claim 2), serves as the input to the simulation system. The simulation system is designed to simulate this quantum computation, hence it receives the quantum computation as input.

The quantum computation provides specific quantum processing of data, serving as the necessary input for the simulation system. The simulation system, in turn, receives this quantum computation to perform the simulation. The aim of the simulation system is to simulate the quantum computation accurately, necessitating the reception of the specific quantum computation as input.

Regarding the details, definitions, parameters, mechanism, structure, working, properties, mathematical construct, metrics, measurements, and other forms of the quantum computation and the simulation system, the quantum computation is a form of computation that utilizes quantum mechanics principles. It involves data processing using quantum bits, or qubits, which can exist in multiple states simultaneously due to the principle of superposition. This allows quantum computations to process a vast number of possibilities simultaneously.

The simulation system is a computer system designed to simulate the quantum computation. It employs a lattice-free tensor network simulation, which adapts dynamically to the interaction pattern in the quantum computation (Claim 1). This dynamic adaptation allows the simulation system to simulate the quantum computation accurately, without the need for any geometric assumptions. The simulation system receives the quantum computation as input, initializes an initial state in the tensor network simulation, applies a quantum gate on two quantum bits, and performs several other actions to simulate the quantum computation.

Step 102 and sub-step 102-a pertain to the implementation of a lattice-free tensor network simulation based on the received quantum computation. This process involves a quantum computation and a simulation system. The quantum computation, serving as the input, is processed by the simulation system. The simulation system is designed to adapt to the interaction pattern in the quantum computation, hence it implements a lattice-free tensor network simulation.

The quantum computation provides the specific interaction pattern for the simulation system. The simulation system implements the lattice-free tensor network simulation to simulate the quantum computation. The aim of the simulation system is to adapt to the interaction pattern in the quantum computation, necessitating the implementation of a lattice-free tensor network simulation.

Regarding the details, definitions, parameters, mechanism, structure, working, properties, mathematical construct, metrics, measurements, and other forms of the quantum computation and the simulation system, the quantum computation is a form of computation that utilizes quantum mechanics principles. It involves data processing using quantum bits, or qubits, which can exist in multiple states simultaneously due to the principle of superposition. This allows quantum computations to process a vast number of possibilities simultaneously.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation accurately, without the need for any geometric assumptions. The simulation system receives the quantum computation as input, initializes an initial state in the tensor network simulation, applies a quantum gate on two quantum bits, and performs several other actions to simulate the quantum computation.

Step 104 and sub-step 104-a pertain to the initialization of an initial state in the tensor network simulation. This process involves an initial state and a simulation system. The initial state, serving as the starting point for the simulation, is set up by the simulation system. The simulation system is designed to simulate the quantum computation, hence it initializes an initial state in the tensor network simulation.

The initial state provides the starting conditions for the simulation system. The simulation system initializes the initial state to start the simulation. The aim of the simulation system is to simulate the quantum computation, necessitating the initialization of an initial state in the tensor network simulation.

Regarding the details, definitions, parameters, mechanism, structure, working, properties, mathematical construct, metrics, measurements, and other forms of the initial state and the simulation system, the initial state is a state that serves as the starting point for the simulation. It involves the setting up of the initial conditions for the quantum bits, or qubits, which are used in the quantum computation.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation, without the need for any geometric assumptions. The simulation system receives the quantum computation as input, initializes an initial state in the tensor network simulation, applies a quantum gate on two quantum bits, and performs several other actions to simulate the quantum computation.

Step 106 and sub-steps 106-a and 106-b pertain to the application of a quantum gate on two quantum bits in the tensor network simulation. This process involves a quantum gate, two quantum bits, or qubits, and a simulation system. The quantum gate, performing a specific operation on the qubits, is applied by the simulation system. The simulation system is designed to simulate the quantum computation, hence it applies a quantum gate on two qubits in the tensor network simulation.

The quantum gate performs a specific operation on the two qubits. The simulation system applies the quantum gate to the two qubits to simulate the operation of the quantum gate. The aim of the simulation system is to simulate the quantum computation, necessitating the application of a quantum gate on two qubits in the tensor network simulation.

Regarding the details, definitions, parameters, mechanism, structure, working, properties, mathematical construct, metrics, measurements, and other forms of the quantum gate, the qubits, and the simulation system, the quantum gate is a gate that performs a specific operation on the qubits. It involves the manipulation of the states of the qubits, which can exist in multiple states simultaneously due to the principle of superposition. This allows the quantum gate to perform operations simultaneously.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation, without the need for any geometric assumptions. The simulation system receives the quantum computation as input, initializes an initial state in the tensor network simulation, applies a quantum gate on two quantum bits, and performs several other actions to simulate the quantum computation.

Step 108 and sub-steps 108-a, 108-b, 108-c, and 108-d pertain to the application of a quantum gate on two quantum bits in the tensor network simulation, which generates a connection in a network structure and truncates numerical values in the network structure using a mathematical decomposition and an update process. This process involves a quantum gate, two quantum bits, or qubits, a connection, numerical values, a mathematical decomposition, an update process, and a simulation system. The quantum gate, performing a specific operation on the qubits, is applied by the simulation system. The simulation system is designed to simulate the quantum computation, hence it applies a quantum gate on two qubits in the tensor network simulation, generates a connection, and truncates numerical values.

The quantum gate performs a specific operation on the two qubits. The simulation system applies the quantum gate to the two qubits to simulate the operation of the quantum gate. The aim of the simulation system is to simulate the quantum computation, necessitating the application of a quantum gate on two qubits in the tensor network simulation, the generation of a connection, and the truncation of numerical values.

Regarding the details, definitions, parameters, mechanism, structure, working, properties, mathematical construct, metrics, measurements, and other forms of the quantum gate, the qubits, the connection, the numerical values, the mathematical decomposition, the update process, and the simulation system, the quantum gate is a gate that performs a specific operation on the qubits. It involves the manipulation of the states of the qubits, which can exist in multiple states simultaneously due to the principle of superposition. This allows the quantum gate to perform operations simultaneously.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation, without the need for any geometric assumptions. The simulation system receives the quantum computation as input, initializes an initial state in the tensor network simulation, applies a quantum gate on two quantum bits, generates a connection, truncates numerical values, and performs several other actions to simulate the quantum computation.

Step 110 and sub-step 110-a pertain to the computation of an entropy measure for all connections in the network structure. This process involves an entropy measure, connections, and a simulation system. The entropy measure, quantifying the amount of disorder or randomness in the connections, is computed by the simulation system. The simulation system is designed to simulate the quantum computation, hence it computes an entropy measure for all connections in the network structure.

The entropy measure quantifies the amount of disorder or randomness in the connections. The simulation system computes the entropy measure for all connections to quantify the disorder or randomness in the connections. The aim of the simulation system is to simulate the quantum computation, necessitating the computation of an entropy measure for all connections in the network structure.

Regarding the details, definitions, parameters, mechanism, structure, working, properties, mathematical construct, metrics, measurements, and other forms of the entropy measure, the connections, and the simulation system, the entropy measure is a measure that quantifies the amount of disorder or randomness in the connections. It involves the calculation of a specific value for each connection, which can be used to quantify the disorder or randomness in the connection.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation, without the need for any geometric assumptions. The simulation system receives the quantum computation as input, initializes an initial state in the tensor network simulation, applies a quantum gate on two quantum bits, generates a connection, computes an entropy measure for all connections, and performs several other actions to simulate the quantum computation.

Step 112 and sub-step 112-a pertain to the truncation of the connections with the lowest entropy measure to a dimensional parameter. This process involves connections, an entropy measure, a dimensional parameter, and a simulation system. The connections, having a certain amount of disorder or randomness quantified by the entropy measure, are truncated by the simulation system. The simulation system is designed to simulate the quantum computation, hence it truncates the connections with the lowest entropy measure to a dimensional parameter.

The connections have a certain amount of disorder or randomness quantified by the entropy measure. The simulation system truncates the connections with the lowest entropy measure to a dimensional parameter to reduce the complexity of the network structure. The aim of the simulation system is to simulate the quantum computation, necessitating the truncation of the connections with the lowest entropy measure to a dimensional parameter.

Regarding the details, definitions, parameters, mechanism, structure, working, properties, mathematical construct, metrics, measurements, and other forms of the connections, the entropy measure, the dimensional parameter, and the simulation system, the connections are links in the network structure that have a certain amount of disorder or randomness quantified by the entropy measure. The dimensional parameter is a value to which the connections are truncated.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation, without the need for any geometric assumptions. The simulation system receives the quantum computation as input, initializes an initial state in the tensor network simulation, applies a quantum gate on two quantum bits, generates a connection, computes an entropy measure for all connections, truncates the connections with the lowest entropy measure to a dimensional parameter, and performs several other actions to simulate the quantum computation.

Step 114 and sub-step 114-a pertain to the computation of expectation values of observables at the end of the simulation of the quantum computation. This process involves expectation values, observables, and a simulation system. The expectation values, quantifying the average outcomes of measurements of the observables, are computed by the simulation system. The simulation system is designed to simulate the quantum computation, hence it computes expectation values of observables at the end of the simulation.

The expectation values quantify the average outcomes of measurements of the observables. The simulation system computes the expectation values of observables to quantify these average outcomes. The aim of the simulation system is to simulate the quantum computation, necessitating the computation of expectation values of observables at the end of the simulation.

Regarding the details, definitions, parameters, mechanism, structure, working, properties, mathematical construct, metrics, measurements, and other forms of the expectation values, the observables, and the simulation system, the expectation values are values that quantify the average outcomes of measurements of the observables. They involve the calculation of a specific value for each observable, which can be used to quantify the average outcome of measurements of the observable.

The simulation system is a computer system designed to simulate the quantum computation. It employs a lattice-free tensor network simulation, which adapts dynamically to the interaction pattern in the quantum computation. This dynamic adaptation allows the simulation system to simulate the quantum computation, without the need for any geometric assumptions. The simulation system receives the quantum computation as input, initializes an initial state in the tensor network simulation, applies a quantum gate on two quantum bits, generates a connection, computes an entropy measure for all connections, truncates the connections with the lowest entropy measure to a dimensional parameter, and computes expectation values of observables at the end of the simulation.

The Quantum Computation Simulation System, numbered as 200, is designed to simulate quantum computations. This system is composed of two main components. The first, known as the Quantum Processor (202), is responsible for receiving and processing quantum computations. It is made up of two sub-components. The Quantum State Initiator (202-a) sets up the initial state in the tensor network simulation. This initial state is an initial product quantum state. The Quantum Gate Operator (202-b) applies a quantum gate on two quantum bits in the tensor network simulation. The application of this quantum gate generates a connection in a network structure and truncates numerical values in the network structure using a mathematical decomposition and an update process.

The second main component of the system is the Tensor Network Simulator (204). This component implements a lattice-free tensor network simulation based on the received quantum computation. The tensor network simulation adapts dynamically to an interaction pattern in the quantum computation. This component also includes two sub-components. The Network Structure Manager (204-a) manages the connections in the network structure, computes an entropy measure for all connections, and truncates the connections with the lowest entropy measure to a dimensional parameter. The Expectation Value Calculator (204-b) computes expectation values of observables at the end of the simulation of the quantum computation. The computation of these expectation values involves quantum bits determined in a submodule and uses an approximation method.

The Quantum Computation Simulation System (200) begins its operation with the Quantum Processor (202) receiving a quantum computation to be simulated. Once the quantum computation is received, the Quantum State Initiator (202-a) sets up the initial state in the tensor network simulation. Following the initialization of the initial state, the Quantum Gate Operator (202-b) applies a quantum gate on two quantum bits in the tensor network simulation. The application of this quantum gate generates a connection in a network structure and truncates numerical values in the network structure using a mathematical decomposition and an update process.

The Tensor Network Simulator (204) then implements a lattice-free tensor network simulation based on the received quantum computation. The Network Structure Manager (204-a) manages the connections in the network structure, computes an entropy measure for all connections, and truncates the connections with the lowest entropy measure to a dimensional parameter. Finally, the Expectation Value Calculator (204-b) computes expectation values of observables at the end of the simulation of the quantum computation. The computation of these expectation values involves quantum bits determined in a submodule and uses an approximation method.

The Quantum Processor, numbered as 202, is part of the Quantum Computation Simulation System. It is responsible for receiving and processing quantum computations. This component is made up of two sub-components. The Quantum State Initiator (202-a) sets up the initial state in the tensor network simulation. This initial state is an initial product quantum state. The Quantum Gate Operator (202-b) applies a quantum gate on two quantum bits in the tensor network simulation. The application of this quantum gate generates a connection in a network structure and truncates numerical values in the network structure using a mathematical decomposition and an update process.

The Quantum Processor (202) begins its operation by receiving a quantum computation to be simulated. Once the quantum computation is received, the Quantum State Initiator (202-a) sets up the initial state in the tensor network simulation. Following the initialization of the initial state, the Quantum Gate Operator (202-b) applies a quantum gate on two quantum bits in the tensor network simulation. The application of this quantum gate generates a connection in a network structure and truncates numerical values in the network structure using a mathematical decomposition and an update process.

In summary, the Quantum Processor (202) is responsible for receiving and processing quantum computations. It is made up of the Quantum State Initiator (202-a) that sets up the initial state and the Quantum Gate Operator (202-b) that applies a quantum gate on two quantum bits. These sub-components work together to ensure the simulation of quantum computations.

The Tensor Network Simulator, numbered as 204, is part of the Quantum Computation Simulation System. It implements a lattice-free tensor network simulation based on the received quantum computation. The tensor network simulation adapts dynamically to an interaction pattern in the quantum computation.

This component includes two sub-components. The Network Structure Manager (204-a) manages the connections in the network structure, computes an entropy measure for all connections, and truncates the connections with the lowest entropy measure to a dimensional parameter. This process ensures that the number of bond indices in the network structure is always smaller than a numerical parameter K.

The Expectation Value Calculator (204-b) computes expectation values of observables at the end of the simulation of the quantum computation. The computation of these expectation values involves quantum bits determined in a submodule and uses an approximation method.

The Tensor Network Simulator (204) implements a lattice-free tensor network simulation based on the received quantum computation. The Network Structure Manager (204-a) manages the connections in the network structure, computes an entropy measure for all connections, and truncates the connections with the lowest entropy measure to a dimensional parameter. Finally, the Expectation Value Calculator (204-b) computes expectation values of observables at the end of the simulation of the quantum computation. The computation of these expectation values involves quantum bits determined in a submodule and uses an approximation method.

In summary, the Tensor Network Simulator (204) is responsible for implementing a lattice-free tensor network simulation. It is made up of the Network Structure Manager (204-a) that manages the connections in the network structure and the Expectation Value Calculator (204-b) that computes expectation values of observables at the end of the simulation.

## Claims

1. A computer-implemented method, comprising:
receiving a quantum computation to be simulated;
implementing a lattice-free tensor network simulation based on the received quantum computation, wherein the tensor network simulation adapts dynamically to an interaction pattern in the quantum computation;
initializing an initial state in the tensor network simulation;
applying a quantum gate on two quantum bits in the tensor network simulation, wherein the application of the quantum gate generates a connection in a network structure and truncates numerical values in the network structure using a mathematical decomposition and an update process such that the number of numerical values is smaller than a numerical parameter D;
computing an entropy measure for all connections in the network structure;
truncating the connections with the lowest entropy measure to a dimensional parameter, such that the number of bond indices in the network structure is always smaller than a numerical parameter K;
computing expectation values of observables at the end of the simulation of the quantum computation, wherein the computation of the expectation values involves quantum bits determined in a submodule determining the quantum bits and uses an approximation method.

2. The method of claim 1, wherein the quantum computation is a quantum processing of data.

3. The method of claim 1, wherein the tensor network simulation is an adaptive simulation approach that does not rely on a geometric assumption.

4. The method of claim 1, wherein the initial state is an initial product quantum state.

5. The method of claim 1, wherein the quantum gate is a quantum 2-qubit gate.

6. The method of claim 1, wherein the quantum bits are arbitrary quantum bits.

7. The method of claim 1, wherein the connection is a new link in the network structure.

8. The method of claim 1, wherein the numerical values are the largest singular values of a singular value decomposition.

9. The method of claim 1, wherein the mathematical decomposition is a singular value decomposition.

10. The method of claim 1, wherein the update process is a simple tensor update.

11. The method of claim 1, wherein the entropy measure is a local correlation entropy.

12. The method of claim 1, wherein the dimensional parameter is bond dimension one.

13. The method of claim 1, wherein the computation of the expectation values uses a mean-field approximation.

14. A computational system, comprising:
a module that receives a quantum computation to be simulated;
a module that implements a lattice-free tensor network simulation based on the received quantum computation, wherein the tensor network simulation adapts dynamically to an interaction pattern in the quantum computation;
an inicialization submodule that initializes an initial state in the tensor network simulation;
a gate submodule that applies a quantum gate on two quantum bits in the tensor network simulation, wherein the application of the quantum gate generates a connection in a network structure and truncates numerical values in the network structure using a mathematical decomposition and an update process such that the number of numerical values is smaller than a numerical parameter D;
a submodule that computes an entropy measure for all connections in the network structure;
a submodule that truncates the connections with the lowest entropy measure to a dimensional parameter, such that the number of bond indices in the network structure is always smaller than a numerical parameter K;
a module that computes expectation values of observables at the end of the simulation of the quantum computation, wherein the computation of the expectation values involves quantum bits determined in a submodule determining the quantum bits and uses an approximation method.

15. The system of claim 14, wherein the quantum computation is a quantum processing of data.

16. The system of claim 14, wherein the tensor network simulation is an adaptive simulation approach that does not rely on a geometric assumption.

17. The system of claim 14, wherein the initial state is an initial product quantum state.

18. The system of claim 14, wherein the quantum gate is a quantum 2-qubit gate.

19. The system of claim 14, wherein the quantum bits are arbitrary quantum bits.

20. The system of claim 14, wherein the computation of the expectation values uses a mean-field approximation.
